# EUROPEAN PATENT SPECIFICATION

(11) **EP 3 674 882 B1**
(45) Date of publication and mention of the grant of the patent: **27.03.2024**
(21) Application number: 19220067.3
(22) Date of filing: 30.12.2019
(51) Int. Cl.: G06F 3/16

(54) **LOCALIZED VIRTUAL PERSONAL ASSISTANT**
LOKALISIERTER VIRTUELLER PERSÖNLICHER ASSISTENT
ASSISTANT PERSONNEL VIRTUEL LOCALISÉ

(30) Priority: 28.12.2018 US 201862786256 P; 23.12.2019 US 201916726228
(43) Date of publication of application: 01.07.2020
(73) Proprietor: Harman International Industries, Incorporated, Stamford, CT 06901 (US)
(72) Inventor: ARUNACHALAM, Srinath, Stamford, CT Connecticut 06901 (US)
(74) Representative: Rummler, Felix

(56) References cited:
- US-A1- 2015 170 664
- US-A1- 2016 171 980
- US-A1- 2017 357 637
- US-A1- 2018 321 905

## Description

### CROSS-REFERENCE TO RELATED APPLICATIONS

This application claims the benefit of the U.S. Provisional Application titled "LOCALIZED VIRTUAL PERSONAL ASSISTANT," filed on December 28, 2018, and having Serial No. 62/786,256.

### BACKGROUND

### Field of the Various Embodiments

The various disclosed embodiments relate generally to computing devices, and more specifically, to a localized virtual personal assistant.

### Description of the Related Art

Meetings have evolved from simple face-to-face encounters. Users have widely embraced technology to augment meetings. Whether it is technology for manipulating the meeting environment, for meeting with remote users, and/or for sharing digital information during a meeting, technology-augmented meetings are now the norm, especially in organizational settings.

The wide adoption of technology to augment meetings also poses challenges. One such challenge is the sheer difficulty of operating various devices at a meeting location. For example, a meeting location may have a video conferencing system with a display, camera, a phone, and a network device for accessing remote video meetings, as well as systems for manipulating the environment of the meeting location, such as a thermostat and powered window shades. The sheer number of, and lack of familiarity with, devices available at the meeting location can overwhelm users.

A possible solution to this challenge of operating devices at a meeting location is to operate the devices via a voice assistant. For example, conventional voice assistants, examples of which include ALEXA^{®} by Amazon.com, Inc. and GOOGLE^{®} ASSISTANT by Google LLC, may be implemented to operate devices at a meeting location. Users may then operate the devices via voice commands to the voice assistant. However, a drawback of this solution is that the conventional voice assistants are cloud-based, general purpose systems. Conventional voice assistants typically require cloud-based processing and data transmissions over the Internet to and from a cloud system. Conventional voice assistants also typically include constant listening for speech in the environment and retention of detected speech. This poses a risk of exposing sensitive information spoken during the meeting to a third party. This also introduces latency in operation of the devices due to the transmissions over the Internet and the cloud-based, remote processing. Additionally, conventional voice assistants are typically designed to perform many disparate functions. The processing to identify the function to be performed amongst the many disparate functions also adds to the latency. Further, because the conventional voice assistants typically require cloud-based processing and Internet transmissions, the voice assistant may be unavailable when the connection to the Internet is not functioning properly at the meeting location.

As the foregoing illustrates, what is needed are more effective techniques for operating devices at a meeting location.

US 2015/170664 A1 and US 2017/357637 A1 describes methods for controlling external devices to perform functions based on received voice commands.

### SUMMARY

The present invention is defined in claim 1. Preferred features are recited in the dependent claims. In the following description, any embodiment referred to and not falling within the scope of the claims is merely an example useful to the understanding of the invention.

One embodiment sets forth a method for controlling a device at a location. The method includes detecting a first device at a location, associating the first device with at least one device command, receiving an input, processing the input locally to determine a first device command associated with the input and included in the at least one device command, and causing one or more first operations to be performed by the first device in accordance with the first device command.

Further embodiments, provide, among other things, a system and one or more non-transitory computer readable media configured to implement the method set forth above.

An advantage and technological improvement of the disclosed techniques is that devices and systems at a location may be operated via a local voice assistant without requiring the Internet and/or cloud-based processing. Accordingly, devices and systems at the location may be operated via voice input at a reduced latency compared to operation using conventional voice assistants. Furthermore, the local voice assistant does not require persistence or retention of captured voice or speech data for its operations. Without persistence of the speech or voice data, leaking of private information that may be included in the speech or voice data may be reduced or eliminated compared to conventional voice assistants.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
FIG. 1 illustrates a computing environment, according to one or more aspects not covered by the scope of the appended claims;
FIG. 2 illustrates a block diagram of a control device, in the computing environment of FIG. 1, that is configured to implement an embodiment covered by the scope of the appended claims;
FIGs. 3A-3C illustrates a flow diagram of an exemplary process for commanding one or more devices in a localized computing environment, according to one or more aspects not covered by the scope of the appended claims; and
FIG. 4 illustrates a flowchart of method steps for commanding a device in a localized computing environment, according to an embodiment covered by the scope of the appended claims.

### DETAILED DESCRIPTION

In the following description, numerous specific details are set forth to provide a more thorough understanding of the various embodiments. However, it will be apparent to one of skilled in the art that the inventive concepts may be practiced without one or more of these specific details.

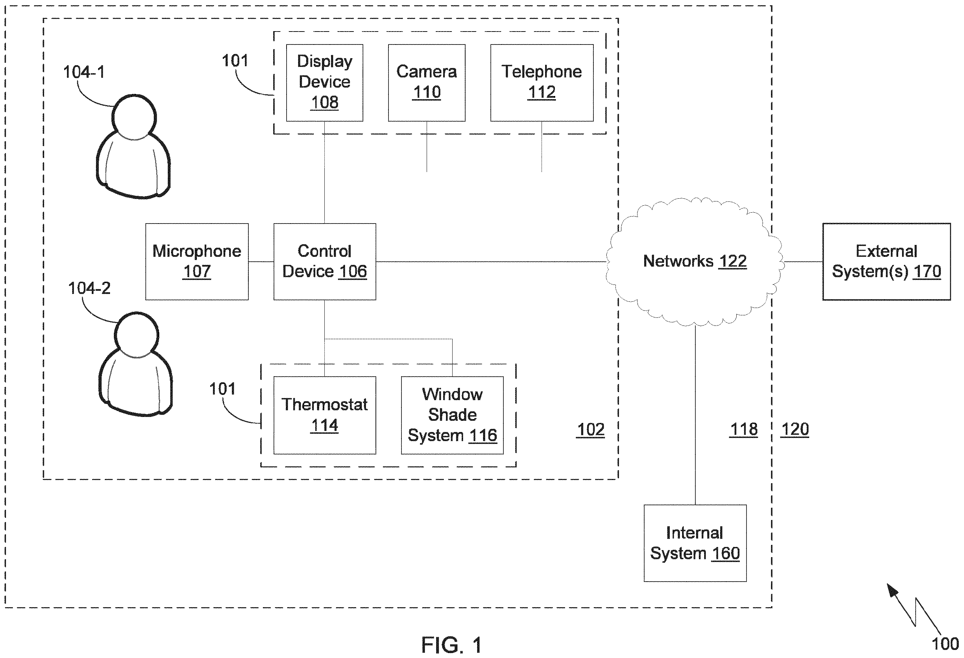

FIG. 1 illustrates a computing environment 100, according to one or more aspects not covered by the scope of the appended claims.

Computing environment 100 includes a location 102 within an organization 118. In various embodiments, location 102 may be a space (e.g., a conference room or other room, a lobby area, a hall, etc.) associated with organization 118 (e.g., a business). An exterior environment 120 is exterior to organization 118 in computing environment 100.

Location 102 includes one or more devices and systems 101 associated with location 102. In various embodiments, the devices and systems 101 (hereinafter referred to as devices 101) are physically located in or at location 102. Devices 101 may be operated to manipulate the environment of location 102, deliver information and content into location 102, and various other functions. For example, devices 101 at a location 102 that is a conference room may include a display device 108 (e.g., a television), a camera 110, a telephone device 112, a thermostat 114, and a window shade control system 116. Display device 108 may display content to users (e.g., participants of a meeting) at location 102 (e.g., a presentation, video of remote conference participants). Camera 110 may capture images of the environment of location 102 (e.g., for display on display device 108, for transmission to a remote meeting location). Telephone 112 may dial a phone number to establish a phone call (e.g., into a hosted conference dial-in, to a meeting participant). Thermostat 114 may detect the temperature of location 102 and/or control a heating and/or cooling system (e.g., HVAC system, air conditioner, heating system) in order to manipulate the temperature of location 102. Window shade system 116 may operate (e.g., raise or lower) one or more shades, blinds, or the like for transparent panels (e.g., windows, transparent glass walls) at location 102. It should be appreciated that, while devices 101 as shown in FIG. 1 include display 108, camera 110, telephone 112, thermostat 114, and window shade system 116, devices 101 may include more or less devices.

Each of devices 101 at location 102 may be controlled, commanded, or operated via another device at location 102, in particular a control device 106. In various embodiments, each of devices 101 implements one or more protocols that facilitate communicating with control device 106, receiving control signals from control device 106, and performing one or more operations in response to the control signals. More generally, devices 101 may communicate with control device 106, receive control signals from control device 106, and respond to the control signals via any technically feasible technique or protocol (e.g., Consumer Electronics Control (CEC) over High-Definition Multimedia Interface (HDMI)). The technique and/or protocol may be a standard, may be non-proprietary or proprietary, and may be specific to a certain brand or manufacturer of devices or implementable by devices across different brands or manufacturers.

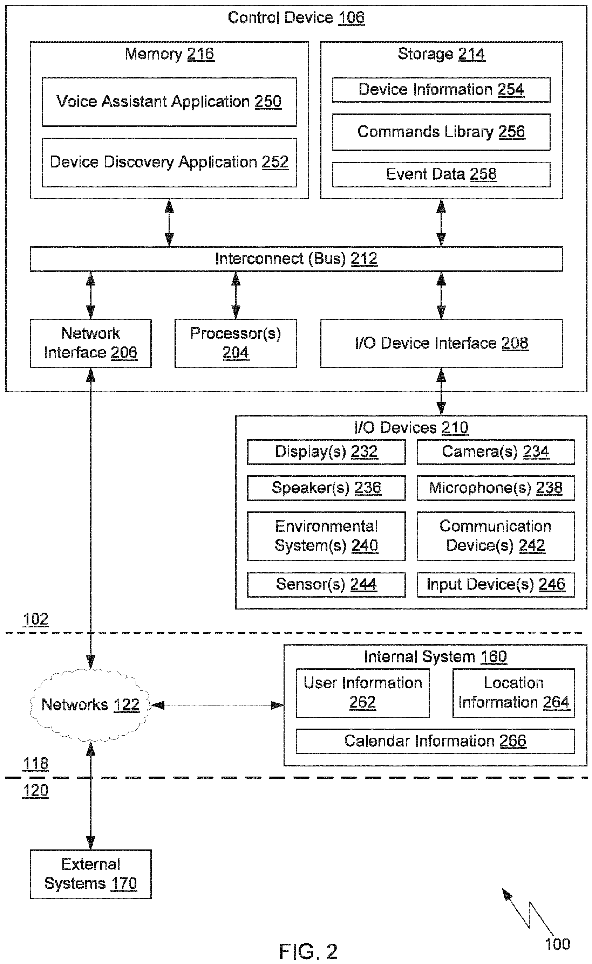

Location 102 includes a control device 106. Control device 106 is communicatively coupled to each of devices 101. Control device 106 may be communicatively coupled to each of devices 101 via a wired (e.g., HDMI, Universal Serial Bus (USB)) and/or a wireless (e.g., Bluetooth, Wi-Fi, etc.) connection. Control device 106 has knowledge of multiple techniques and protocols for communicating with and controlling a variety of devices that may be included in devices 101. For example, control device 106 may include a library or database of commands (e.g., commands library 256, FIG. 2) that lists possible commands and corresponding control signals that may be communicated to devices in accordance with the device-control techniques and protocols described above. Furthermore, control device 106 may include a database (e.g., device information 254, FIG. 2) that stores information regarding each of devices 101. The information regarding devices 101 may include, for a given device 101 at location 102, without limitation: an identifier of the device, an indication of the location or position of the device within location 102, an indication of what the device is or does (e.g., a device type or classification), an identification of the coupling between control device 106 and the device (e.g., the wired or wireless connection to which the device is coupled), and identification of a protocol for communicating with and controlling the device (e.g., if a device recognizes and responds to CEC signals, device information for the device may indicate such).

Control device 106 may perform device discovery to detect devices 101 at location 102 and gather information regarding the devices for storage in the database of devices 101. The discovery may be performed at an initial setup of control device 106 and/or at any time thereafter (e.g., when a new device is added to location 102, when a device is removed from location 102, periodically, when requested by a user). For example, control device 106 may listen for device identification signals broadcasted by a device 101. Additionally or alternatively, control device 106 may broadcast a signal and listen for acknowledgements from devices 101. More generally, control device 106 and devices 101 may discover each other and/or announce their presence to each other using any technically feasible technique and/or protocol, which may be associated with the same techniques and/or protocols for receiving and responding to control signals as described above. For example, both control device 106 and a device 101 may implement a handshake protocol that allows control device 106 and device 101 to discover and establish communication with each other. In various embodiments, the discovery of devices 101 by control device 106 is limited to devices located at location 102 - control device 106 is associated with location 102 and is accordingly limited to discovering devices 101 associated with (e.g., located at or within) location 102. Further, in various embodiments, during device discovery control device 106 may determine whether a discovered device can be controlled via control device 106 - control device 106 determines whether its commands library includes commands associated with a protocol that the discovered device implements. If the commands library does not include commands for that protocol, control device 106 may ignore that discovered device or obtain the commands for that protocol (e.g., from internal system 160 or an external system 170) and update the commands library with the obtained commands.

Control device 106 may control a device 101 via control signals. For example, control device 106 may transmit control signals to display device 108, in order to command display device 108 at location 102 to perform one or more operations (e.g., power on or off, switch to a certain input, change to a certain channel, adjust volume up or down). Similarly, control device 106 may transmit control signals to window shades system 116, in order to command window shades system 116 to lower or raise certain window shades at location 102 to a certain level. Control device 106 may transmit control signals to control a device 101 via any technically feasible technique or protocol (e.g., Consumer Electronics Control (CEC) over High-Definition Multimedia Interface (HDMI)), and device 101 may respond to the control signal via the corresponding technique or protocol. As described above, control device 106 may include a commands library that stores possible commands according to such techniques and protocols, and control device 106 may control any device 101 configured to recognize at least a portion of these possible commands in accordance with at least one of these techniques and protocols.

In some embodiments, by controlling one or more devices 101, control device 106 sets one or more configurations for location 102. That is, control device 106 establishes a configuration (e.g., an environmental configuration, a content input/output configuration, a communications configuration, any combination thereof) for location 102 by controlling any number of devices 101. In some embodiments, an environmental configuration may be set to manipulate or regulate the physical environment (e.g., temperature, amount of sunlight entering into location 102, privacy from surrounding environment) of location 102. A content input/output configuration may be set to manipulate or regulate the content input/output (e.g., display 108 ready to display content from a certain input, volume of audio output) within location 102. A communication configuration may be set to manipulate or regulate communications (e.g., telephone 112 dialing out to a certain phone number, accessing an online meeting space hosted by an external system 170) at location 102. For example, control device 106 may change a content input/output configuration for location 102 by commanding display device 108 to power on. Similarly, control device 106 may change one or more configurations for location 102 via multiple control signals, such as commanding display device 108 to power on, commanding thermostat 114 to adjust the temperature, commanding window shades system 116 to lower the window shades, and commanding camera 110 to capture images.

Control device 106 may control one or more devices 101 in response to instructions or commands input by a user 104 at location 102. A user 104 may input one or more instructions for controlling devices 101 to control device 106 via any technically feasible technique (e.g., a graphical user interface, voice input). For example, control device 106 may include an input device via which users 104 may input the instructions or commands. In various embodiments, the input may be made via speech - the input is a voice input. The control device 106 may capture speech uttered by users 104 via a microphone 107 and process the speech to recognize voice commands in the speech and command devices 101 based on the voice commands

In some embodiments, control device 106 may be communicatively coupled to systems that are outside of location 102 via one or more networks 122. Those systems outside of location 102 may be internal or external to organization 118. For example, control device 106 may be communicatively coupled to an internal system 160 via a first network 122 internal to organization 118 (e.g., a local area network), and to an external system 170 via a second network 122 external to organization 118 (e.g., the Internet). Control device 106 may access internal system 160 to obtain or store information (e.g., obtain from or store in a database). The information obtained from internal system 160 may include information regarding devices 101 (e.g., a database of devices installed at various locations within organization 118), users 104, and calendar information indicating events scheduled for locations within organization 118. Control device 106 may access external system 170 to access a resource (e.g., a web conference space via a hyperlink), hosted at external system 170, that is associated with an event at a location 102. Accessing internal system 160 or external system 170 as described above may be a part of setting a configuration for location 102 (e.g., accessing a web conference space link sets a communication configuration for location 102).

As described above, a configuration for location 102 may include control or command of one or more devices 101. A configuration that may be set for location 102 may be predefined or user-defined. A defined configuration may specify the device(s) 101, the operation(s) associated with the configuration, and, optionally an order of performance of the operations (if multiple operations are involved). For example, a configuration may specify a single operation of adjusting thermostat 114 to 75 degrees Fahrenheit. As another example, a configuration may specify multiple operations that include powering on display 108, switching the input at display 108 to a first HDMI input, obtaining a teleconference dial-in number from internal system 160, and dialing the dial-in number using telephone 112. Users may define configurations in any technically feasible manner (e.g., via a graphical user interface provided by an application on control device 106). More generally, inputs associated with one or more device commands may be predefined or user-defined. That is, an input that activates a set of one or more commands to devices 101 may be defined. For example, a voice input (e.g., a voice command) may be associated with one or more devices 101 and one or more operations, and optionally an order of performance of the operations.

In various embodiments, the user input into control device 106 may be voice input (e.g., speech), and control device 106 recognizes voice commands in the voice input. Control device 106 may include a microphone 107 configured to capture audio at location 102, including speech uttered by users 104. Control device 106 processes the captured speech to recognize words and phrases in the speech and to recognize, amongst the words and phrases, wake words denoting a command, the command, and any parameters associated with the command. Control device 106 may perform one or more operations and/or transmit control signals to devices 101 in response to the command(s).

In various embodiments, the commands library in control device 106 may, besides including possible device commands associated with various protocols, further include associations between inputs (e.g., input device inputs, voice inputs, hand gesture inputs), and devices and/or configurations. A voice input may include a voice command that includes one or more words and/or phrases. For example, the command library may map a voice command with the phrase "Turn on the TV" to a device command to power on a display (e.g., display 108). As another example, the command library may map a voice command "Start the meeting" to a multi-operation configuration or a set of device commands defined as including operations of powering on display 108, switching the input at display 108 to a first HDMI input, obtaining a teleconference dial-in number from internal system 160, and dialing the dial-in number using telephone 112. The commands library may associate a given device command, set of device commands, or configuration with a voice command and any number of variations or equivalents of the voice command (e.g., synonyms, equivalents in multiple languages). Accordingly, a user 104 may utter a synonym or the equivalent in another language as if uttering the voice command. Additionally, the commands library may also specify one or more wake words that may precede a voice command to denote the voice command. Control device 106 may process utterances to detect wake words and voice commands in any technically feasible manner (e.g., speech-to-text processing, natural language processing, machine-learning-based speech processing, etc.) using these associations and specifications in the commands library. Further, control device 106 processes utterances for recognition of wake words and voice commands locally. That is, control device 106 does not transmit the captured utterances to other systems for processing.

In some embodiments, location 102 is a conference room within organization 118. Control device 106 has knowledge of devices 101 in the conference room via device discovery, and is configured to command devices 101 based on user inputs (e.g., in order to configure the conference room for a meeting to be held in the conference room by users 104). Control device 106 locally processes speech spoken by users 104 to recognize voice commands in the speech and command devices 101 in response to the voice commands.

FIG. 2 illustrates a block diagram of control device 106, in computing environment 100 of FIG. 1, that is configured to implement an embodiment covered by the scope of the appended claims.

Control device 106 is a computing device suitable for practicing one or more aspects of the various embodiments. Control device 106 is configured to run a voice assistant application 250, and optionally a device discovery application 252, that resides in a memory 216. It is noted that control device 106 described herein is illustrative and that any other technically feasible configurations fall within the scope of the various embodiments.

As shown, control device 106 includes, without limitation, an interconnect (bus) 212 that connects one or more processor(s) 204, an input/output (I/O) device interface 208 coupled to one or more input/output (I/O) devices 210, memory 216, a storage 214, and a network interface 206. Processor(s) 204 may be any suitable processor, such as a central processing unit (CPU), a graphics processing unit (GPU), an application-specific integrated circuit (ASIC), a field programmable gate array (FPGA), any other type of processing unit, or a combination of processing units, such as a CPU configured to operate in conjunction with a GPU. In general, processor(s) 204 may be any technically feasible hardware unit capable of processing data and/or executing software applications, including voice assistant application 250 and device discovery application 252.

I/O devices 210 may include devices capable of providing input and/or output, as well as devices for communications and environmental manipulation. Devices 101 at location 102 may include any number of I/O devices 210. In various embodiments, I/O devices 210 include one or more displays 232 (e.g., display device 108), one or more cameras 234 (e.g., camera 110), one or more audio speakers 236 (and/or a similar audio output device, such as headphones), one or more microphones 238 (e.g., microphone 107), one or more environmental systems or devices 240 (e.g., thermostat 114, window shade system 116), one or more communication devices 242 (e.g., telephone 112), one or more sensors 244, and one or more input devices 246. I/O devices 210 may be coupled to I/O device interface 208 via a wired (e.g., HDMI, USB) and/or wireless (e.g., Bluetooth, Wi-Fi) connection.

Display device 232 may display visual content (e.g., images, video, etc.) to user(s) 104 at location 102. In various embodiments, display device 232 is a display device (e.g., liquid-crystal display (LCD) screen, light-emitting diode (LED) display screen, organic light-emitting diode (OLED) display screen, a two-dimensional or three-dimensional (e.g., holographic) projection system, etc.) configured to output visual content received from a source (e.g., control device 106 or another device communicatively coupled to display device 232). In some embodiments, location 102 may include multiple display devices 232.

Camera 234 may capture images of the environment of location 102. In various embodiments, camera 234 includes, without limitation, any number and combination of infrared cameras, RGB cameras, and camera arrays that provide multiple perspectives.

Audio speaker(s) 236 output audio signals received from a source (e.g., a computing device communicatively coupled to an input of speaker 236). Audio speakers 236 may be implemented in any number of forms, including but not limited to discrete loudspeaker devices, and on-device speakers (e.g., speakers integrated with display device 232). In some embodiments, speakers 236 may include directional speakers and/or speaker arrays.

Microphone(s) 238 capture sound waves occurring in the environment of location 102 to generate an audio signal from the captured sound waves. Microphones 238 may include an omnidirectional microphone, a microphone array, or other transducers or sensors capable of converting sound waves into an electrical audio signal. Microphone 238 may be disposed at, or separately from, control device 106. Microphone 238 may be fixed, or moveable and orientable in any technically feasible manner. In some embodiments, control device 106 is configured to perform, for audio captured via microphone(s) 238, one or more of echo cancellation, beam forming, and noise cancellation.

Environmental systems or devices 240 manipulate and/or regulate the physical environment of location 102, in particular certain characteristics of the physical environment. Characteristics of the physical environment that may be regulated by environmental systems 240 include, without limitation, the temperature, the amount of light entering location 102 through windows or glass walls, visibility through windows or glass walls, and the amount of light from light fixtures at location 102. For example, environmental systems 240 may include thermostat 114, window shade system 116, and a lighting system.

Communication devices 242 (e.g., telephone 112) perform communication operations. For example, telephone 112 dials a number to establish a communications connection.

Sensors 244 include one or more sensor devices capable of collecting data associated with the environment of location 102 and/or users 104. Examples of sensors may include include, without limitation, biometric sensors, light sensors, thermal sensors, and motion sensors.

Input devices 246 include devices capable of providing manual inputs to control device 106. In some embodiments, input devices 246 include one or more of: a keyboard, a mouse, a touch-sensitive screen, a touch-sensitive pad, buttons, knobs, dials, joysticks, and so forth.

Storage 214 may include non-volatile storage for applications and data and may include fixed or removable disk drives, flash memory devices, and CD-ROM, DVD-ROM, Blu-Ray, HD-DVD, or other magnetic, optical, or solid state storage devices. Voice assistant application 250 and device discovery application 252 may reside in storage 214 and may be loaded into memory 216 when executed. Additionally, in various embodiments, device information 254, commands library 256, and event data 258 may be stored in storage 214. Device information 254 stores information regarding devices 101, including I/O devices 210 coupled to I/O device interface 208, in location 102. The information may include, for example, an identifier of a device 101, an indication of the location or position of the device within location 102, an indication of what the device is or does (e.g., a device type or classification), an identification of the coupling between control device 106 and the device, and identification of a protocol for communicating with and controlling the device.

Commands library 256 includes one or more databases of possible commands and control signals to devices 101 under various protocols. Commands library 256 also includes associations (e.g., mappings) between voice inputs (e.g., voice command words/phrases and associated synonyms and equivalents in different languages) with device commands, where a voice command (and its associated synonyms and other-language equivalents) may be associated with one or more device commands. Commands library 256 may further include wake words associated with control device 106 (e.g., wake words that control device 106 may recognize as preceding a voice command). In some embodiments, commands library 256 additionally includes one or more databases of phonemes for text-to-speech conversion and training data (e.g., a voice recognition model) for voice recognition and/or speech-to-text conversion. Further, in some embodiments, commands library 256 may store associations of configurations that may be set for location 102 with device commands and voice commands. Even further, in some embodiments, commands library 256 may store associations between a voice command and one or more operations that may be performed by control device 106 (e.g., by voice assistant application 250). These operations may include, for example, obtaining information from internal system 160, accessing an online conference space hosted at external system 170, and storing into event data 258 a recording (e.g., video and/or audio) of location 102 and/or content output to an I/O device 210 (e.g., display device 232). A voice command may be associated, within commands library 256, with one or more commands to one or more devices 101, one or more operations to be performed by control device 106, or any combination thereof.

Event data 258 may include data of events at location 102 (e.g., the calendar information for an event, a recording of an event and/or content presented at the event). In some embodiments, at least a portion of device information 254 may be retrieved from internal system 160 (e.g., from location information 264) and stored locally. In some embodiments, event data 258 (e.g., data for a certain event) may be cleared after some period of time has passed since the event and/or at user instruction.

Memory 216 may include a random access memory (RAM) module, a flash memory unit, or any other type of memory unit or combination thereof. Processing unit(s) 204, I/O device interface 208, and network interface 206 are configured to read data from and write data to memory 216. Memory 216 includes various software programs (e.g., an operating system, one or more applications) that can be executed by processor(s) 204 and application data associated with said software programs, including voice assistant application 250 and device discovery application 252.

Voice assistant application 250 is configured to process audio of speech captured via microphone 238 to recognize wake words and voice command in the speech. Voice assistant application 250 listens for voice inputs captured via microphone 238. Voice assistant application 250 recognizes a wake word in a voice input as a word or phrase that denotes an upcoming voice command in the voice input. Voice assistant application 250 then further recognizes the voice command in the voice input. Based on the recognized voice command, voice assistant application 250 determines one or more device commands associated with the voice command and transmits control signals corresponding to the device commands to one or more devices 101. The control signals command the devices 101 to perform one or more operations associated with the recognized voice command. In some embodiments, voice assistant application 250 may detect and identify users 104, process images captured by camera 234 to recognize hand gestures, obtain user information 262 and calendar information 266 from internal system 160, and to use user information 262 and calendar information 266 to aid in setting a configuration for location 102 (e.g., limit permission to set configuration to certain users based on list of invitees to an event and identification of users present in location 102). Further, in some embodiments, voice assistant application 250 may train and apply a model for processing voice inputs by users within organization 118 to recognize wake words and voice commands. Voice assistant application 250 may train and apply the model using any technically feasible technique (e.g., machine learning-based techniques).

Device discovery application 252 performs device discovery operations to detect devices 101 in location 102. Device discovery application 252 obtains information about the discovered devices and stores the information in device information 254. Device discovery information 252 may also retrieve location information 264 from internal system 160 to aid in device discovery. It should be appreciated that while voice assistant application 250 and device discovery application 252 are shown in FIG. 2 as separate applications, voice assistant application 250 and device discovery application 252 may be combined into one application, or both applications 250 and 252 may be parts of another application.

Networks 122 may be any technically feasible type of communications network that allows data to be exchanged between control device 106 and other systems (e.g., a web server, a database server, another networked computing device or system), including internal system 160 and external system 170. In some embodiments, networks 122 include a local area network (LAN), a campus area network (CAN), a wide area network (WAN), and/or a virtual private network (VPN) for data communications amongst systems within organization 118 (e.g., control device 106, internal system 160). Networks 122 may further include a WAN and/or the Internet for data communications between systems within organization 118 and systems in exterior environment 120 outside of organization 118 (e.g., external system 170). Control device 106 may connect with networks 122 via network interface 206. In some embodiments, network interface 206 is hardware, software, or a combination of hardware and software, that is configured to connect to and interface with networks 122.

Internal system 160 may be a computing system or device (e.g., a database or other server, an email and calendar server) that is located within organization 118 but not necessarily located at or in location 102. Internal system 160 is accessible to control device 106 via networks 122 that is within organization 118, such as a LAN, CAN, and/or a WAN. Internal system 160 may include user information 262, location information 264, and calendar information 266. User information 262 stores information on users (e.g., employees) within organization 118. User information 262 may include user profiles, user voice samples, and user images (e.g., photos). Location information 264 stores information on various locations, including location 102, within organization 118. Location information 264 may include information on devices 101 at location 102, and control device 106 may obtain this information in addition to or in lieu of performing device discovery with device discovery application 252. Calendar information 266 includes information regarding events scheduled for various locations within organization 118, including location 102. The events may include scheduled meetings or conferences at certain locations and associated location reservations (e.g., reservations for location 102). The information in calendar information 226 may include, for a given event at a location (e.g., location 102) within organization 118, without limitation: date and time of the event, invitees to the event (e.g., invitees' names and email addresses), information regarding a remote teleconference or web conference space associated with the event (e.g., a teleconference dial-in number, a hyperlink to a web-hosted online meeting space), and event authentication information (e.g., meeting name and passcode associated with the dial-in or web-hosted online meeting space, a password for starting an event and setting a configuration for location 102 for the event). In some embodiments, calendar information 266 also includes information of bookings or reservations of locations within organization 118 for events (e.g., conference room reservations).

External system 170 includes any system that is in external environment 120 external to organization 118. For example, external system 170 may be a web-hosted online meeting system, where an online meeting space associated with an event at location 102 is hosted. Control device 106 may access the online meeting space via a hyperlink to the online meeting space in external system 170.

In some embodiments, control device 106 may identify users 104 at location 102. For example, control device 106 may process images captured via camera 234 and/or audio captured via microphone 238 to identify one or more users 104 at location 102. Control device 106 may identify users 104 using any technically feasible technique (e.g., face recognition based on user images in user information 262, voice recognition based on user voice samples in user information 262). In some embodiments, a user identity may be used in lieu of an event password - voice assistant application 250 may skip prompting for an event password to start a meeting if certain event invitees are recognized (e.g., the event host or organizer). In some embodiments, control device 106 may restrict authorization for voice commands and setting of configurations based on user identity (e.g., restriction to specific identified users, restriction based on user role with respect to the event (e.g., event host, event organizer, event invitee, event support staff, non-invitee, attendee from outside organization 118)). For example, certain voice commands and/or configurations may be restricted to be activatible by an event host; a non-host event attendee or invitee issuing a restricted voice command may be ignored by voice assistant application 250. Further, in some embodiments, control device 106 may set a personalized configuration based on the identified user(s) 104. For example, a user 104 may be associated with a specific volume level configuration for speaker 236. In response to identifying that user, control device 106 may cause the volume level for speaker 236 to be set according to the configuration associated with that user. Such a user-based restriction may be event-specific or global for location 102. An event-specific restriction may be specified in the event information for the event (e.g., in event information obtained from calendar information 266 and stored in event data 258). A global restriction for location 102 may be specified in commands library 256 - a device command and/or a configuration may be associated with a restriction in commands library 256.

In some embodiments, control device 106 may learn preferences associated with users 104 (e.g., preferences of individual users, preferences of groups of users) and/or events (e.g., preferences for recurring events). Voice assistant application 250 may gather data, which may be stored in event data 258, during events at location 102. Voice assistant application 250 may process that data to learn the preferences using any technically feasible technique (e.g., machine learning techniques, occurrence frequency analysis). For example, voice assistant application 250 may gather data regarding audio volume, temperature, window shade state, etc. during events, correlate the data to users and/or events, and based on the correlations, learn preferences associated with the users and/or events. Voice assistant application 250 may store these preferences and apply the preferences (e.g., as a personalized configuration, described above) when the users are in attendance or the event occurred again at location 102. In some embodiments, voice assistant application 250 may generate (e.g., train and retrain) a preferences model based on the gathered data. The preferences model reflects preferences that have been learned based on gathered data so far and may be used to apply preferences to a new set of users or a new event. The preferences model may be stored in event data 258 in storage 214.

In some embodiments, the environment of location 102 (e.g., an event at location 102) and/or content presented at the event may be recorded by control device 106. Recording may be activated by voice assistant application 250 in response to an input (e.g., an associated voice command) by a user. The recording may be stored in event data 258 and/or in internal system 160. For example, voice assistant application 250 may store the event recoding in event data 258, or upload the recording to internal system 160 and delete the copy of the recording stored at control device 106. In some embodiments, voice assistant application 250 informs users 104 attending the event of the recording (e.g., via an email sent to the attendees) and where the recording may be accessed (e.g., a hyperlink to the recording). In some embodiments, control device 106 by default does not record an event or content presented at the event - recording is activated in response to an explicit input to do so by a user 104.

In some embodiments, users 104 may make gestures (e.g., hand gestures) to activate device commands and/or setting of configurations, in addition to using voice inputs or inputs via input devices 246. Control device 106 may process images captured via camera 234 and/or detect hand and arm movements via sensors 244 (e.g., motion sensor) to recognize hand gestures in the images. Control device 106 may process images to recognize hand gestures using any technically feasible technique (e.g., object recognition in images). Based on the recognized hand gesture and associations between hand gestures and device commands in commands library 256, control device 106 may transmit control signals to devices 101 and/or set a configuration for location 102. For example, a user 104 may perform a thumb up or thumb down gesture to adjust up or down, respectively, the volume of audio output from speaker 236. A device command and/or a configuration may be associated with a hand gesture in commands library 256.

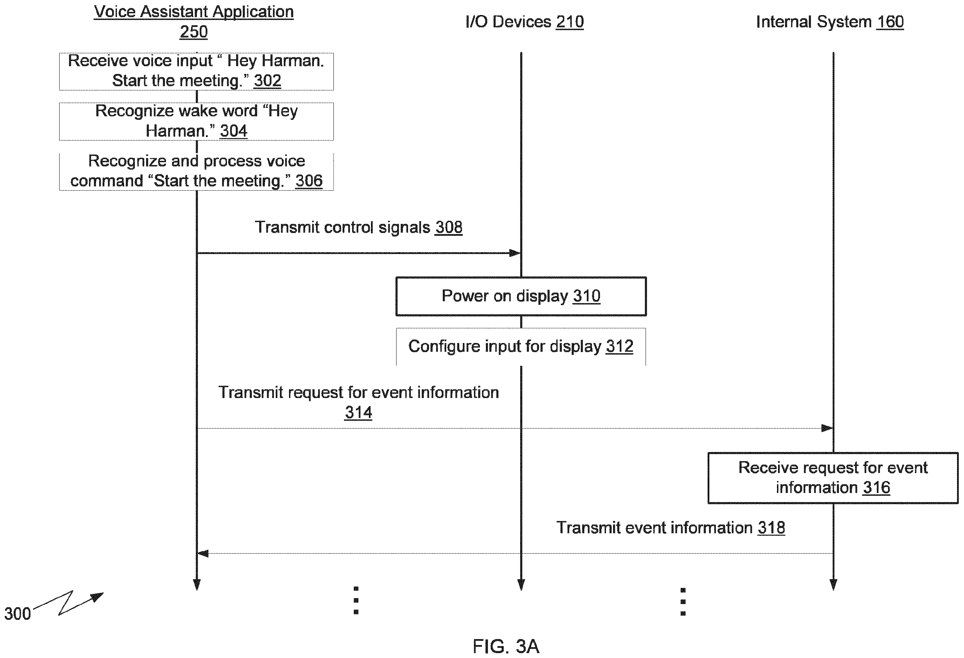

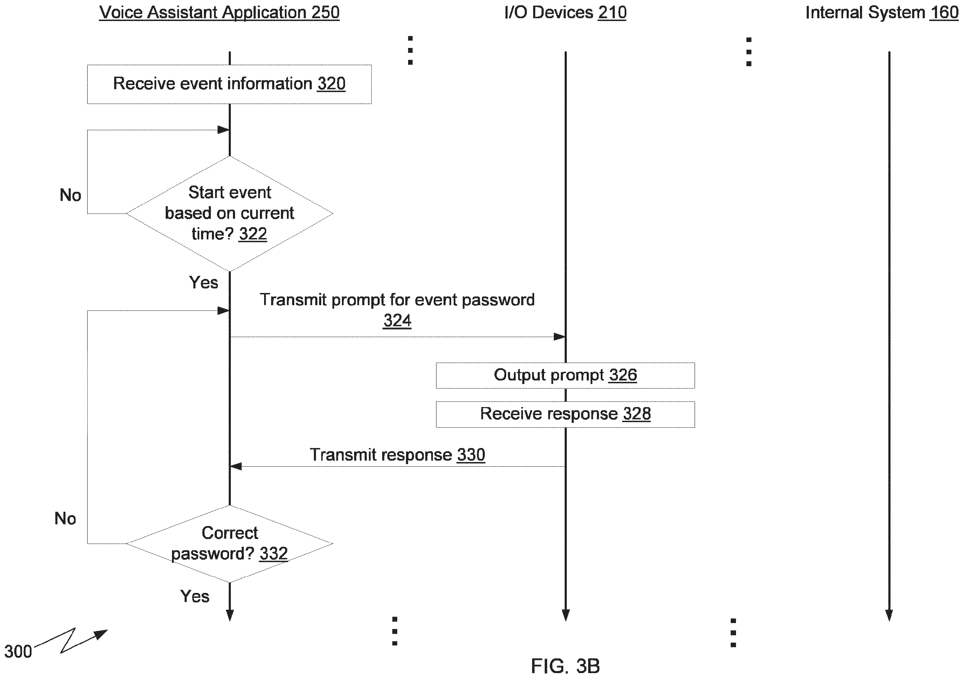

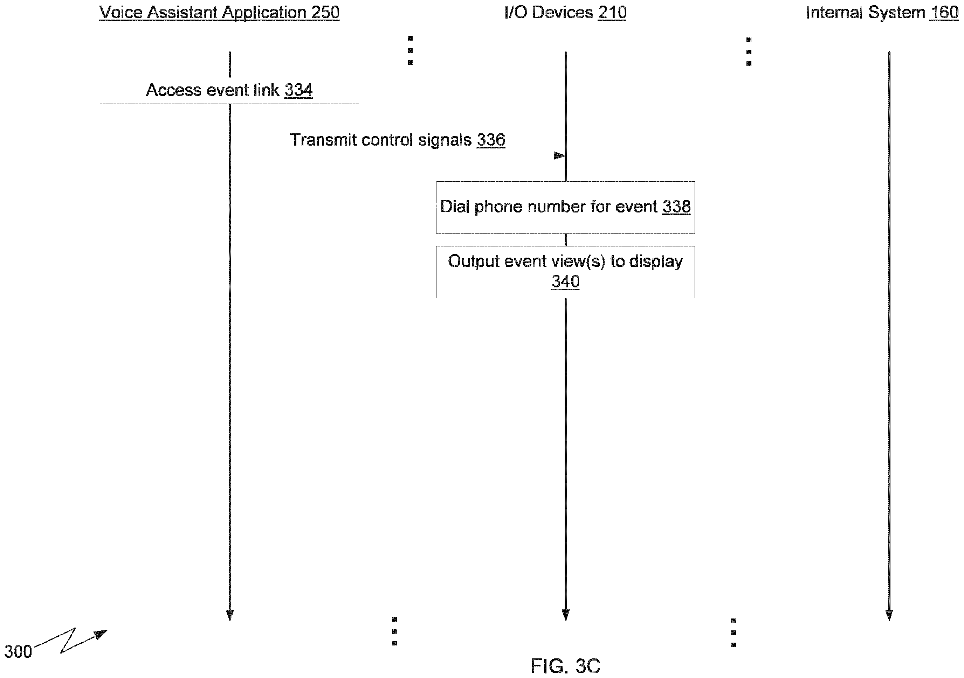

FIGs. 3A-3C illustrates a flow diagram of an exemplary process 300 for commanding one or more devices in a localized computing environment, according to one or more aspects not covered by the scope of the appended claims.

Process 300 illustrates an example of commanding one or more devices 101 at location 102 via a voice command that is associated with multiple operations.

Process 300 begins at step 302 with voice assistant application 250 receiving a voice input "Hey Harman. Start the meeting." In this voice input, "Hey Harman." is the wake word and "Start the meeting" is the voice command. Control device 106, in particular voice assistant application 250, listens for speech input by users 104 at location 102 to attend an event. When a user 104 utters the voice input "Hey Harman. Start the meeting," the voice input is captured by microphone 238 and the captured voice input is received by voice assistant application 250.

At step 304, voice assistant application 250 processes the voice input locally (e.g., performs speech-to-text processing and natural language processing at control device 106 without transmitting any data outside of control device 106) and recognizes the wake word "Hey Harman" within the voice input. A voice command is preceded by a wake word or phrase that indicates that the following speech includes the voice command. Accordingly, voice assistant application 250, when attempting to recognize a voice command in voice inputs, first processes the voice input "Hey Harman. Start the meeting" locally to recognize a wake word "Hey Harman."

At step 306, after recognizing the wake word, voice assistant application 250 processes the voice input locally and recognizes the words "Start the meeting" in the voice input as a voice command. Voice assistant application 250 further processes the voice command locally to determine a device command and/or a configuration associated with the voice command and whether any devices associated with the device command and/or configuration is present among devices 210 at location 102. Voice assistant application 250 matches the voice command "Start the meeting" to a set of device commands and/or a configuration that includes multiple operations, which are described below, and determines whether the devices associated with the set of device commands and/or configuration are present at location 102 amongst devices 210. If at least one of the devices is not present, voice assistant application 250 may proceed and disregard the operation(s) for the not-present device, or return an error prompt to the user. In response to the prompt, the user may choose (and command voice assistant application 250) to proceed and disregard the operation(s) for the not-present device or to abort the voice command. If the devices are present, voice assistant application 250 may proceed as described below.

At step 308, voice assistant application 250 transmits control signals to I/O devices 210. These control signals include, for example, signals to a display 232 to power on and to configure the input (e.g., set the input to a first HDMI input) at display 232. Based on the set of device commands and/or configuration associated with the recognized voice command, voice assistant application 250 transmits a number of control signals to I/O devices 210. At step 310, display 232 powers on in response to the control signals. At step 312, display 232 configures its input (e.g., switch to a certain input specified in the control signals) in response to the control signals.

At step 314, voice assistant application 250 transmits 314 a request for meeting information to internal system 160. For example, voice assistant application 250 transmits an information request to internal system 160 to obtain information (e.g., calendar information 266, user information 262) associated with an event scheduled to be at location 102 (e.g., event scheduled to be held at location 102 based on event invites and/or a reservation for location 102).

At step 316, internal system 160 receives the request from voice assistant application 250. In response to the request, internal system 160 retrieves the information for the next event scheduled for location 102 from calendar information 266. At step 318, internal system 160 transmits the event information to voice assistant application 250. At step 320, voice assistant application 250 receives the event information. The event information includes the date and time for the next scheduled event at location 102, invitees to the event, optionally remote teleconference web conference space information, and optionally event authentication information (e.g., the event password).

At step 322, voice assistant application 250 compares the current time with the time for the event to determine if the event is to be started. If the event is not to be started yet (e.g., the event time is more than a threshold time period after the current time), then process 300 proceeds back to step 322, where voice assistant application 250 waits. Voice assistant application 250 may check for the start of the event periodically until the event time is less than the threshold time period after the current time.

If the event is to be started, then process 300 proceeds to step 324, where voice assistant application 250 transmits a prompt for an event password to I/O devices 210. The prompt may be an auditory and/or visual prompt to users 104 at location 102 (e.g., attendees of the event) to provide a password for the event. At step 326, I/O devices 210 (e.g., display 232 and/or speaker 236) outputs the prompt and waits for a response to the prompt. At step 328, a response to the prompt is received. A user 104 present at location 102 may speak the response to microphone 238 or enter the response via an input device 246. At step 330, the response is transmitted to voice assistant application 250.

At step 332, voice assistant application checks if the response includes the correct event password. If the response does not include the correct password, then process 300 proceeds back to step 324, where users 104 may be prompted again for a password. If the response does include the correct password, then process 300 proceeds to step 334, where voice assistant application accesses an external system 170 via a hyperlink associated with the event. In particular, the hyperlink links to an online meeting space hosted by external system 170. The hyperlink may be included in the event information transmitted from internal system 160.

At step 336, voice assistant application 250 transmits additional control signals to I/O devices 210. These control signals include control signals to dial a phone number, in particular a teleconference dial-in phone number included in the event information transmitted from internal system 160, and to output content associated with the online meeting space. At step 310, in response to the control signals, a communication device 242 (e.g., a telephone), dials the dial-in number. At step 340, display 232 outputs content from the online meeting space (e.g., a view of content being shared in the online meeting space, a view of remote participants in the online meeting space). Accordingly, process 300 illustrates an example of issuing a set of device commands to devices 101, and thereby setting a configuration for an event at location 102, via one voice input ("Hey Harman. Start the meeting").

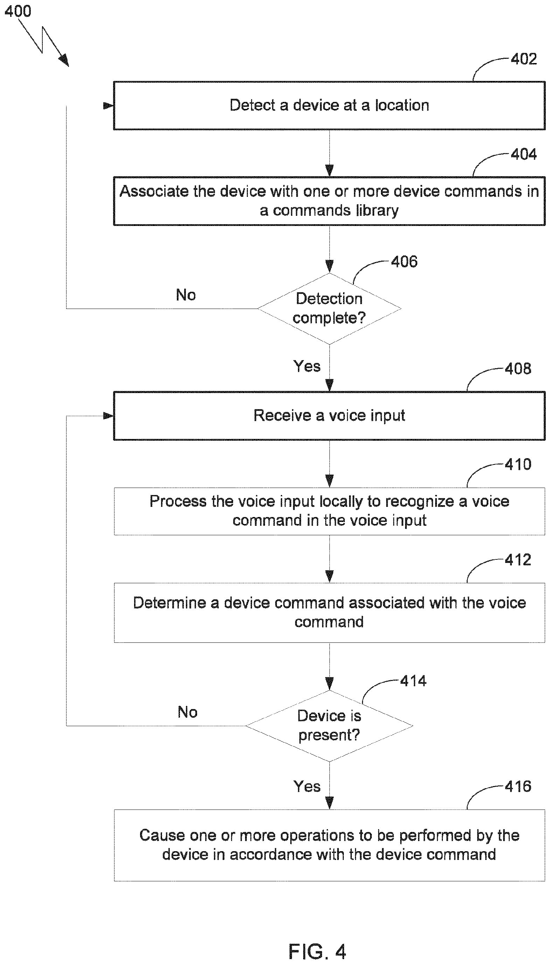

FIG. 4 illustrates a flowchart of method steps for commanding a device in a localized computing environment, according to one or more aspects covered by the scope of the appended claims.

As shown in FIG. 4, a method 400 begins at step 402, where a voice assistant application 250 detects a device at a location. Voice assistant application 250 and/or device discovery application 252 may detect one or more devices at location 102 using device discovery application 252 and/or location information 264 obtained from internal system 160.

At step 404, voice assistant application 250 associates the device with one or more commands in a commands library. For example, voice assistant application 250 may store information associated with a detected device in device information 254. Device information 254 may include an identification of the protocol implemented by the detected device to receive and respond to control signals from control device 106. Based on the identified protocol, voice assistant application 250 associates the detected device with device commands in commands library 256 that are associated with that identified protocol. Further, within commands library 256, the device commands may be associated with certain voice commands and/or gestures.

At step 406, if device detection is not completed (e.g., there are more devices to detect), then, through step 406 - No, process 400 proceeds back to step 402, where voice assistant application 250 and/or device discovery application 252 may detect another device at the location. If device detection is complete, then, through step 406 - Yes, process 400 proceeds to step 408.

At step 408, voice assistant application 250 receives a voice input. Control device 106 may capture, via microphone 238, a voice input uttered by a user 104.

At step 410, voice assistant application 250 processes the voice input locally to recognize a voice command in the voice input. Voice assistant application 250 processes the voice input locally (i.e., not transmitting information for processing the voice input outside of at least organization 118 and optionally not transmitting outside of control device 106). Voice assistant application 250 recognizes a wake word and the voice command in the voice input based on the local processing.

At step 412, voice assistant application 250 determines a device command associated with the voice command. Voice assistant application 250 determines a device command, included in commands library 256, that is associated with the recognized voice command. Based on the protocol identifications in device information 254, voice assistant application 250 may further recognize that the device command is included in the one or more device commands associated with the device in step 404. After the device command is determined, data corresponding to the voice input (e.g., the captured sample of the voice input) may be discarded by voice assistant application 250 (e.g., removed from control device 106).

At step 414, voice assistant application 250 determines whether the device is present in the location. Voice assistant application 250 determines whether the device associated with the device command is present at location 102 based on device information 254 and/or whether the device is currently communicatively coupled to control device 106.

If the device is not present, then, through step 414 - No, process 400 proceeds back to step 408, where voice assistant application 250 may disregard the voice command and receive another voice input. If the device is present, then, through step 414 - Yes, process 400 proceeds to step 416, where voice assistant application 250 causes one or more operations to be performed by the device in accordance with the device command. Voice assistant application 250 may transmit control signals corresponding to the device command to the device to cause the one or more operations to be performed.

In some embodiments, in lieu of step 414, voice assistant application 250 may transmit the control signals corresponding to the device command to the device via the last known communicative coupling to the device (e.g., based on device information 256), without first determining the presence of the device. If the device is not present, the control signals will have no effect. If the device is present at the last known communicative coupling to the device and receives the control signals, then the device performs the one or more operations in accordance with the device command.

In sum, a localized voice assistant application may be used to operate devices and systems associated with a location. A computing system implemented at a location detects or discovers one or more devices and systems associated with the location. For a device or system detected, the computing system associates one or more device commands with the device. A device command may be further associated with a voice command. The computing system receives an input (e.g., a voice input that includes a wake word and a voice command) and processes the input locally to determine a device command based on the input. The computing system transmits control signals corresponding to the device command to a device, at the location, that is associated with the device command.

An advantage and technological improvement of the disclosed techniques is that devices and systems at a location may be operated via a local voice assistant without requiring the Internet and/or cloud-based processing. A voice assistant at a system local to the location processes voice input locally to recognize commands for operating the devices and systems, without transmit data outside of the location for processing. Accordingly, devices and systems at the location may be operated via voice input at a reduced latency compared to operation using conventional voice assistants. Furthermore, the local voice assistant does not require persistence or retention of captured voice or speech data for its operations. Speech captured at the location may be discarded soon after recognition of wake words and voice commands in the speech. Without persistence of the speech or voice data, leaking of private information that may be included in the speech or voice data may be reduced or eliminated compared to conventional voice assistants.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

## Claims

1. A computer-implemented method (400) comprising:
detecting (402), by a voice assistant application (250) executing on a control device (106), a first device at a location, wherein the location is a conference room;
associating (404), by the voice assistant application (250), the first device with at least one device command in a commands library;
receiving (408), by the voice assistant application (250), a voice input from a user at the location to attend an event;
in response to the input, obtaining event information associated with the event at the location, wherein the event information includes information regarding a remote teleconference or web conference space associated with the event;
processing (410), by the voice assistant application (250), the input locally to determine (412) a first device command associated with the input and included in the at least one device command; and
causing (416), by the voice assistant application (250), at least one first operation to be performed by the first device in accordance with the first device command;
wherein the method further comprises performing, by the control device (106):
identifying a user at the location; and
based on the user identification, causing at least one second operation to be performed by the first device, wherein the at least one second operation includes setting a personalized configuration of the first device, including setting a volume level configuration for a speaker (236) of the first device.

2. The method (400) of claim 1, wherein processing (410) the input locally comprises recognizing locally a voice command included in the voice input, wherein the voice command is associated with the first device command.

3. The method (400) of claim 1, wherein processing (410) the input locally comprises foregoing transmitting the input to a remote system external to the location for processing.

4. The method (400) of claim 1, wherein the input is further associated with a second device command, and the method further comprises causing at least one second operation to be performed by a second device in accordance with the second device command.

5. The method (400) of claim 1, further comprising, in response to the input, accessing a remote system external to the location.

6. The method (400) of claim 1, further comprising:
processing images captured at the location to recognize a gesture of a user; and
based on the gesture, causing at least one second operation to be performed by the first device.

7. A system (100), comprising:
a microphone (107);
a memory (214, 216) storing instructions including a voice assistant application (250);
a control device (106); and
a processor (204) that is coupled to the memory and, when executing the instructions, is configured to perform the method of any of claim 1 to 6.

## Patentansprüche

1. Computerimplementiertes Verfahren (400), Folgendes umfassend:
Detektieren (402) einer ersten Vorrichtung an einem Ort durch eine Sprachassistentenanwendung (250), die auf einer Steuervorrichtung (106) ausgeführt wird, wobei der Ort ein Konferenzraum ist;
Zuordnen (404) der ersten Vorrichtung zu dem mindestens einen Vorrichtungsbefehl in einer Befehlsbibliothek durch die Sprachassistentenanwendung (250);
Empfangen (408) einer Spracheingabe von einem Benutzer an dem Ort, um an einer Veranstaltung teilzunehmen, durch die Sprachassistentenanwendung (250);
als Reaktion auf die Eingabe, Erlangen von Ereignisinformationen, die dem Ereignis an dem Ort zugeordnet sind, wobei die Ereignisinformationen Informationen über eine Fern-Telefonkonferenz oder einen Webkonferenzraum beinhalten, die dem Ereignis zugeordnet sind;
lokales Verarbeiten (410) der Eingabe durch die Sprachassistentenanwendung (250), um einen ersten Vorrichtungsbefehl zu bestimmen (412), der der Eingabe zugeordnet und in dem mindestens einen Vorrichtungsbefehl beinhaltet ist; und
Veranlassen (416), durch die Sprachassistentenanwendung (250), mindestens einer ersten Operation, die durch die erste Vorrichtung gemäß dem ersten Vorrichtungsbefehl durchgeführt wird;
wobei das Verfahren ferner Durchführen von Folgendem durch die Steuervorrichtung (106) umfasst:
Identifizieren eines Benutzers an dem Ort; und
auf Grundlage der Benutzeridentifikation, Veranlassen mindestens einer zweiten Operation, die durch die erste Vorrichtung durchzuführen ist, wobei die mindestens eine zweite Operation Einstellen einer personalisierten Konfiguration der ersten Vorrichtung umfasst, einschließlich Einstellen einer Lautstärkepegelkonfiguration für einen Lautsprecher (236) der ersten Vorrichtung.

2. Verfahren (400) nach Anspruch 1, wobei das lokale Verarbeiten (410) der Eingabe lokales Erkennen eines in der Spracheingabe beinhalteten Sprachbefehls umfasst, wobei der Sprachbefehl dem ersten Vorrichtungsbefehl zugeordnet ist.

3. Verfahren (400) nach Anspruch 1, wobei das lokale Verarbeiten (410) der Eingabe Verzichten auf das Übertragen der Eingabe an ein Fernsystem außerhalb des Orts zur Verarbeitung umfasst.

4. Verfahren (400) nach Anspruch 1, wobei die Eingabe ferner einem zweiten Vorrichtungsbefehl zugeordnet ist und das Verfahren ferner umfasst, dass mindestens eine zweite Operation durch eine zweite Vorrichtung gemäß den zweiten Vorrichtungsbefehl durchgeführt wird.

5. Verfahren (400) nach Anspruch 1, ferner umfassend, als Reaktion auf die Eingabe, Zugreifen auf ein Fernsystem außerhalb des Standorts.

6. Verfahren (400) nach Anspruch 1, ferner umfassend:
Verarbeiten der am Standort aufgenommenen Bilder, um eine Geste eines Benutzers zu erkennen; und
Veranlassen, auf Grundlage der Geste, dass mindestens eine zweite Operation durch die erste Vorrichtung durchgeführt wird.

7. System (100), Folgendes umfassend:
ein Mikrofon (107);
einen Speicher (214, 216), der Anweisungen speichert, die eine Sprachassistentenanwendung (250) beinhalten;
eine Steuervorrichtung (106); und
einen Prozessor (204), der an den Speicher gekoppelt ist und bei Ausführen der Anweisungen dazu konfiguriert ist, das Verfahren nach einem der Ansprüche 1 bis 6 durchzuführen.

## Revendications

1. Procédé mis en oeuvre par ordinateur (400) comprenant :
la détection (402), par une application d'assistant vocal (250) s'exécutant sur un dispositif de commande (106), d'un premier dispositif à un emplacement, dans lequel l'emplacement est une salle de conférence ;
l'association (404), par l'application d'assistant vocal (250), du premier dispositif à au moins une commande de dispositif dans une bibliothèque de commandes ;
la réception (408), par l'application d'assistant vocal (250), d'une entrée vocale provenant d'un utilisateur à l'emplacement pour assister à un événement ;
en réponse à l'entrée, l'obtention d'informations d'événement associées à l'événement à l'emplacement, dans lequel les informations d'événement comportent des informations concernant un espace de téléconférence ou de conférence Web à distance associé à l'événement ;
le traitement (410), par l'application d'assistant vocal (250), de l'entrée au niveau local pour déterminer (412) une première commande de dispositif associée à l'entrée et incluse dans l'au moins une commande de dispositif; et
le déclenchement (416), par l'application d'assistant vocal (250), d'au moins une première opération à être effectuée par le premier dispositif conformément à la première commande de dispositif ;
dans lequel le procédé comprend en outre la réalisation, par le dispositif de commande (106) :
de l'identification d'un utilisateur à l'emplacement ; et
sur la base de l'identification de l'utilisateur, du déclenchement d'au moins une seconde opération à être effectuée par le premier dispositif, dans lequel l'au moins une seconde opération comporte le réglage d'une configuration personnalisée du premier dispositif, comportant le réglage d'une configuration de niveau de volume pour un haut-parleur (236) du premier dispositif.

2. Procédé (400) selon la revendication 1, dans lequel le traitement (410) de l'entrée au niveau local comprend la reconnaissance au niveau local d'une commande vocale incluse dans l'entrée vocale, dans lequel la commande vocale est associée à la première commande de dispositif.

3. Procédé (400) selon la revendication 1, dans lequel le traitement (410) de l'entrée au niveau local comprend l'abandon de la transmission de l'entrée à un système distant externe à l'emplacement pour le traitement.

4. Procédé (400) selon la revendication 1, dans lequel l'entrée est en outre associée à une seconde commande de dispositif, et le procédé comprend en outre le déclenchement d'au moins une seconde opération à être effectuée par un second dispositif conformément à la seconde commande de dispositif.

5. Procédé (400) selon la revendication 1, comprenant en outre, en réponse à l'entrée, l'accès à un système distant externe à l'emplacement.

6. Procédé (400) selon la revendication 1, comprenant en outre :
le traitement d'images capturées à l'emplacement pour reconnaître un geste d'un utilisateur ; et
sur la base du geste, le déclenchement d'au moins une seconde opération à être effectuée par le premier dispositif.

7. Système (100), comprenant :
un microphone (107) ;
une mémoire (214, 216) stockant des instructions comportant une application d'assistant vocal (250) ;
un dispositif de commande (106) ; et
un processeur (204) qui est couplé à la mémoire et, lors de l'exécution des instructions, est configuré pour exécuter le procédé selon l'une quelconque des revendications 1 à 6.
